# EUROPEAN PATENT APPLICATION

(11) **EP 4 821 346 A1**
(43) Date of publication of application: **14.10.2026**
(21) Application number: 26170191.6
(22) Date of filing: 01.04.2026
(51) Int. Cl.: A01G 23/089

(54) **ROTATION ASSEMBLY FOR FORESTRY FELLING SHEARS, AND THE LIKE**

(30) Priority: 03.04.2025 IT 202500007185
(71) Applicant: CMB S.R.L., 36020 Asigliano Veneto (VI) (IT)
(72) Inventor: Boscardin, Stefano, 36020 Asigliano Veneto (Vicenza) (IT)
(74) Representative: Minghetti, Mauro

(57) **Abstract**

A rotation assembly (1) for forestry felling shears, and the like, comprising a box-shaped body (8) defining a front side (9) and a rear side (10), the front side (9) being intended for connection to a shear (3), the rear side (10) being intended for connection to an adapter (2) in turn suitable for connection to the arm of a working machine; inside the box-shaped body (8) there are rotation members (R) configured to determine the rotation of the shear (3) with respect to the adapter (2) around a rotation axis (A). The rotation members (R) comprise a gear system (15), equipped with at least one input (16) and at least one output (17), and actuator means (18) associated with the input (16), and operationally connected and interlocked with power supply members (32); the output (17) is connected directly to the adapter (2). The actuator means (18) of the gear system (15) comprise two hydraulic motors (30, 31) associated with said input (16), which is therefore double.

## Description

### TECHNICAL FIELD OF THE INVENTION

The present invention relates to a rotation assembly for forestry felling shears, and the like.

### BACKGROUND ART

Forestry felling shears are specialized equipment designed to fell, cut, and manipulate trees and branches in forestry and similar operations.

There are versions in which the shear is rigidly connected to the arm of the operating machine, while in other versions the shear is connected to the arm in a rotating way, even with the possibility of rotation up to 360°, for greater versatility of use and better management of all the felling operational phases.

Currently, in the majority of rotation shear versions, the connection between the arm of the operating machine and the shear itself is achieved by means of a rotation table rotation assembly, actuated by a worm screw-helical wheel mechanism.

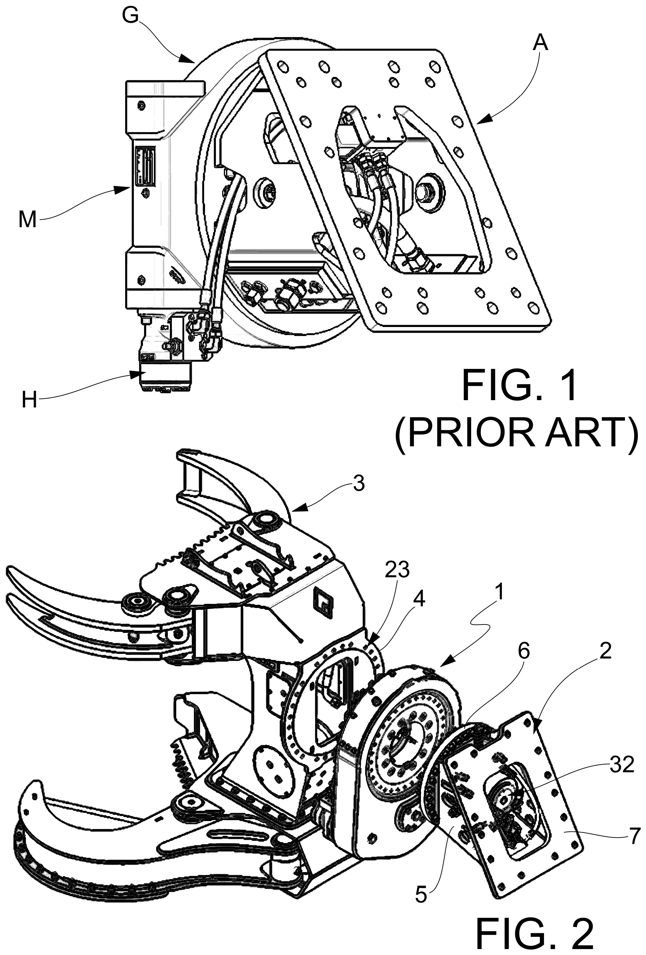

A prior art rotation table rotation assembly is illustrated in the attached Figure 1.

In particular, as it can be seen in the aforementioned Figure 1, the rotation table rotation assembly G is associated with an adapter A which can be connected, in turn, to the arm of the operating machine in a pivoting manner.

The rotation table rotation assembly G comprises a worm screw-worm wheel mechanism M, controlled by a hydraulic motor/actuator H; the mechanism M is able to rotate the rotation table, to which the shear is in turn associated.

The rotation assembly of the rotation table shear, although very widespread, is not without technical drawbacks.

First of all, this assembly is, very often, subject to breakages of some of its components, which limit its lifespan and require frequent maintenance and/or replacement.

Furthermore, in these well-known solutions, problems of poor balance during operation are observed, with drift of the shear, and with unsatisfactory maneuverability, so much so that the operations performed may be imprecise.

Additionally, some critical issues with the assembly have been observed in the after-sales service; in particular, difficulties have been encountered in the maintenance and replacement of some damaged or worn components, due to the complexity of the technical construction solution adopted to obtain the rotational motion, which by its nature is irreversible and cannot withstand accidental impacts due to the optimal positioning of the shears with respect to the log being cut.

### OBJECTS OF THE INVENTION

The aim of the present invention is to improve the state of the art in the field of forestry felling shears, and the like.

Within this aim, it is an object of the present invention to develop a rotation assembly for forestry felling shears, and the like, which allows the previously mentioned drawbacks to be overcome.

Another object of the present invention is to provide a rotation assembly for forestry felling shears, and the like, which is more solid and reliable than known solutions.

Another object of the present invention is to create a rotation assembly for forestry felling shears, and the like, which is more advantageous than known solutions with regard to all the operations to be carried out in the after-sales context.

A further object of the present invention is to devise a rotation assembly for forestry felling shears, more versatile in use than known solutions.

This aim and these objects are achieved by a rotation assembly for forestry felling shears, and the like, according to the attached claim 1.

The rotation assembly comprises a box-shaped body defining a front side and a rear side, where the front side is intended for connection to a shear, while the rear side is intended for connection to an adapter, which in turn is suitable for connection to the arm of a machine.

Inside the box-shaped body there are rotational members configured to determine the rotation of the shear with respect to the adapter around a rotation axis.

The rotational members comprise a gear system, equipped with at least one input and at least one output, and actuator means associated with the input, and operationally connected to, and controlled by, power supply elements; the output of the gear system is, instead, directly connected to the adapter.

The use of rotational members comprising a gear system, instead of a rotation table system used in known solutions, allows the previously mentioned drawbacks to be overcome, obtaining both greater resistance and reliability of the rotation assembly, and easier operation in maintenance and part replacement operations, especially, but not only, in the after-sales sector.

The dependent claims refer to preferred and advantageous embodiments of the invention.

### BRIEF DESCRIPTION OF THE DRAWINGS

The features of the invention will be better understood by any person skilled in the art from the following description and the attached drawings, given as a nonlimiting example, in which:
Figure 1 is an axonometric view of a prior art rotation table rotation assembly for a forestry felling shear;
Figure 2 is an exploded axonometric view of a rotation assembly according to the invention, associated with a felling shear;
Figure 3 is a front view of the rotation assembly, associated with the respective adapter;
Figure 4 is a rear view of the rotation assembly, associated with the respective adapter;
Figure 5 is a side view of the rotation assembly, associated with the respective adapter;
Figure 6 is a top view of the rotation assembly, associated with the respective adapter;
Figure 7 is a cross-section of the rotation assembly, associated with the respective adapter;
Figure 8 is a rear view of the rotation assembly;
Figure 9 is a front view of the rotation assembly;
Figure 10 is an exploded isometric view of the rotation assembly;
Figure 11 is a cross-section of the rotation assembly taken along the XI-XI plane of Figure 8;
Figure 12 is a cross-section of the rotation assembly taken along the XII-XII plane of Figure 11;
Figure 13 is a cross-section of the rotation assembly taken along the XIII-XIII plane of Figure 8;
Figure 14 is a cross-section of the rotation assembly taken along the XIV-XIV plane of Figure 9;

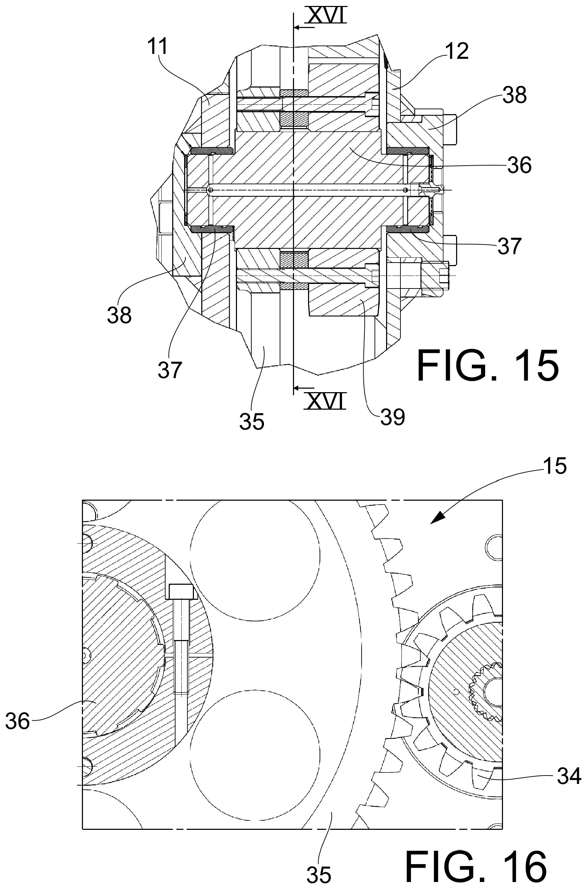

Figure 15 is a detail of Figure 11;
Figure 16 is a cross-section of the rotation assembly taken along the XVI-XVI plane of Figure 15.

### EMBODIMENTS OF THE INVENTION

With reference to the attached Figure 2, the reference numeral 1 indicates overall a rotation assembly for forestry felling shears, and the like, according to the present invention.

In particular, in the aforementioned Figure 2 the rotation assembly 1 is shown, in exploded view, and for illustrative purposes only, together with a respective adapter 2, suitable for connection to the arm of a working machine (not shown in the figure) and also together with the respective felling shear 3.

The felling shear 3 will not be further described in detail below, since it can, in reality, be of any type, without limitations to the purposes of the present invention.

The felling shear 3 comprises a first flange 4 for connection to the rotation assembly 1.

The adapter 2 comprises a central support 5, internally hollow, to which a second flange 6 is connected.

Furthermore, the adapter 2 includes a sort of plate 7, also connected to the central support 5.

The plate 7 is oriented according to a plane inclined with respect to the plane on which the second flange 6 lies.

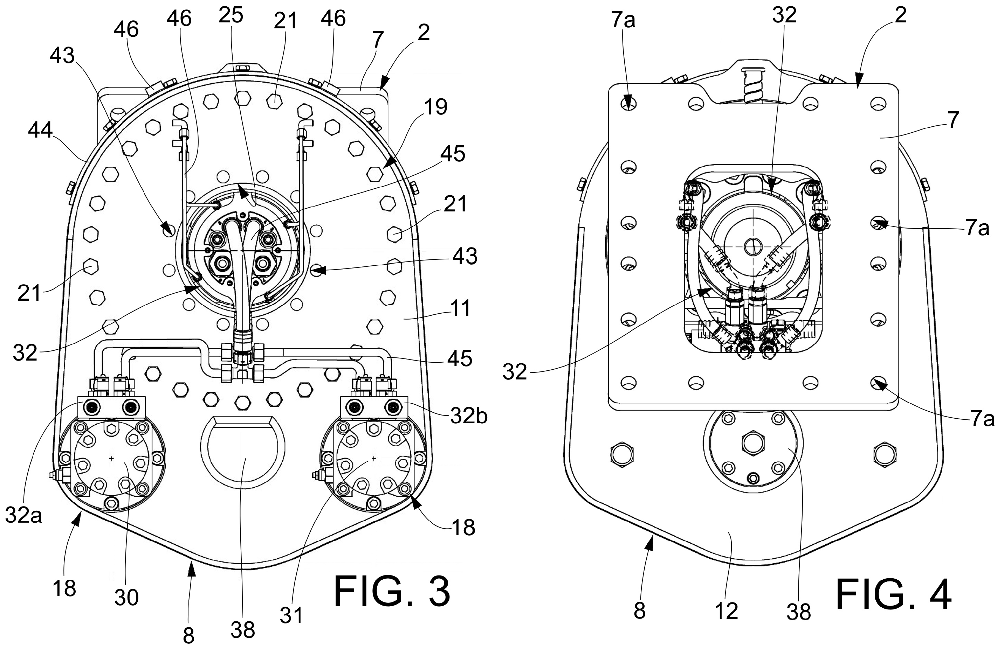

Furthermore, the plate 7 is equipped with through holes 7a (for example Figure 4), for connection to the arm of the operating machine.

The technical solution shown in Figure 2 must not, however, be considered in a limiting manner, in the sense that - as will become clearer below - the rotation assembly 1 according to the present invention can also be associated, more generally, with tools and/or operating machines of any type.

The rotation assembly 1 comprises a box-shaped body 8, or housing.

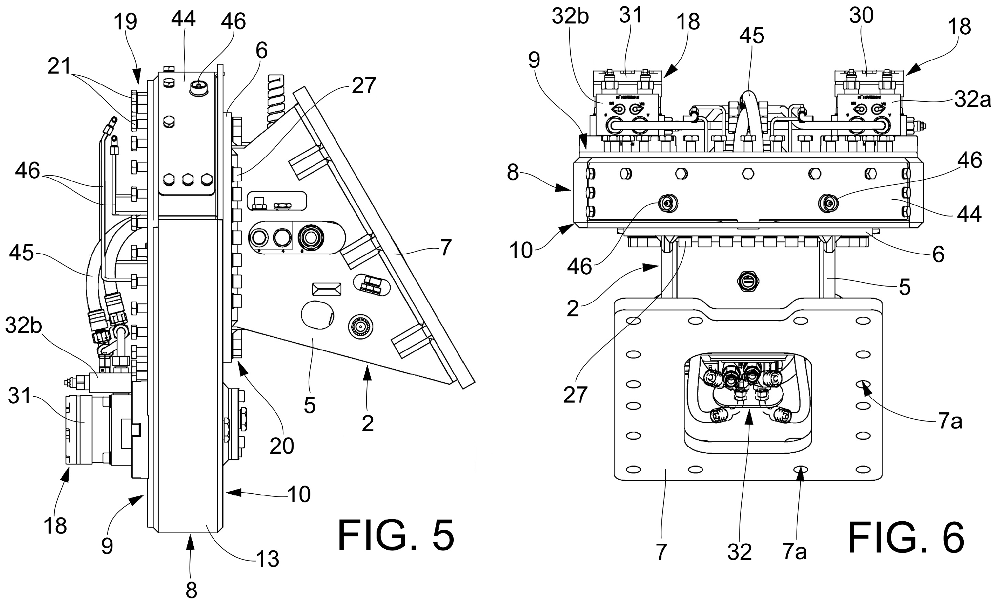

The box-shaped body 8, conventionally, defines a front side 9 and a rear side 10 (Figures 5 and 6).

It should be noted that, in the remainder of the description, the front side 9 of the box-shaped body 8 is the one which, conventionally, is intended for connection with the shear 3.

Furthermore, the rear side 10 of the box-shaped body 8 is the one that, conventionally, is intended for connection with the adapter 2.

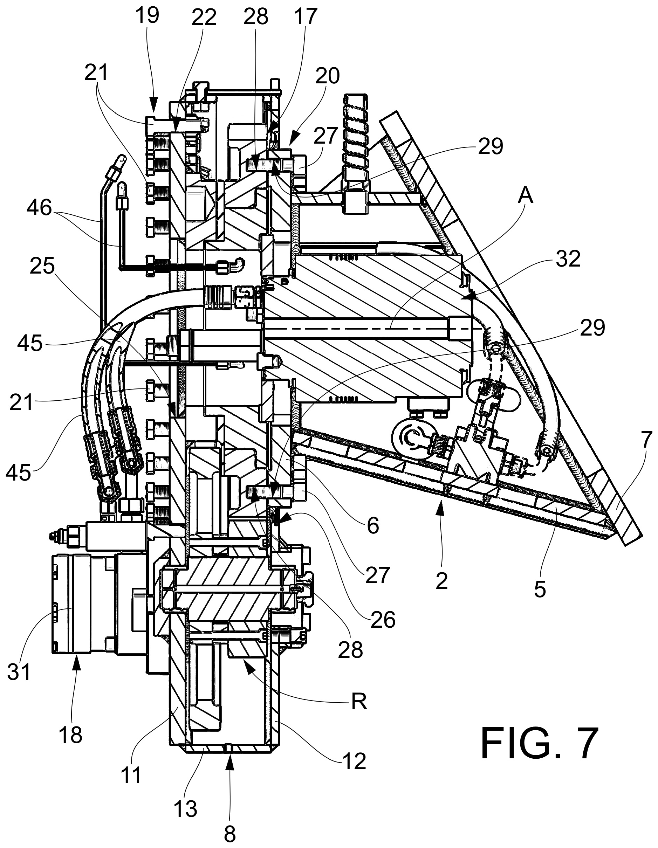

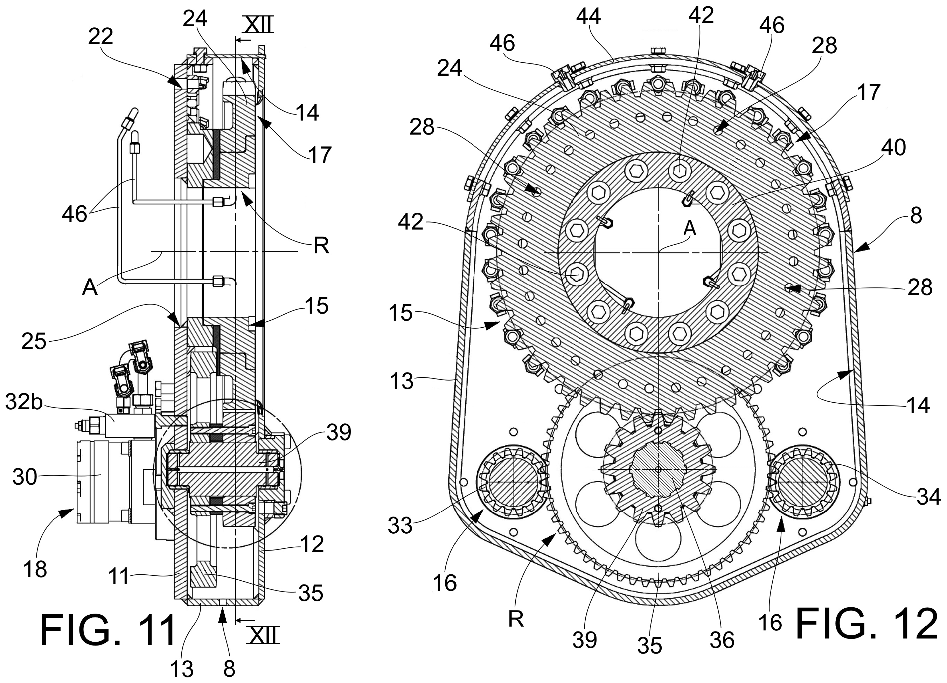

The box-shaped body 8 comprises a front wall 11 (corresponding to the front side 9), a rear wall 12 (corresponding to the rear side 10) and a peripheral wall 13 (Figures 7, 11).

The front wall 11 and the rear wall 12 are substantially flat and parallel; they are joined by the peripheral wall 13, which surrounds them around the perimeter.

The box-shaped body 8 has a substantially rounded/chamfered shape at the peripheral wall 13, for greater ease of assembly and use.

The front wall 11, the rear wall 12 and the peripheral wall 13, therefore, define an internal volume 14 of the box-shaped body 8 (Figures 11, 12).

Inside the box-shaped body 8 there are rotation members R configured to determine the rotation of the shear 3, connected to the front side 9 of the box-shaped body 8, with respect to the adapter 2, connected to the rear side 10 of the box-shaped body 8, around a rotation axis A (Figures 11, 12).

According to one aspect of the invention, the rotation members R comprise a gear system 15; the gear system 15 is housed in the internal volume 14 of the box-shaped body 8.

The gear system 15 comprises at least one input 16 and at least one output 17.

Furthermore, the rotation assembly 1 comprises actuator means 18, which are associated with the input 16 of the gear system 15.

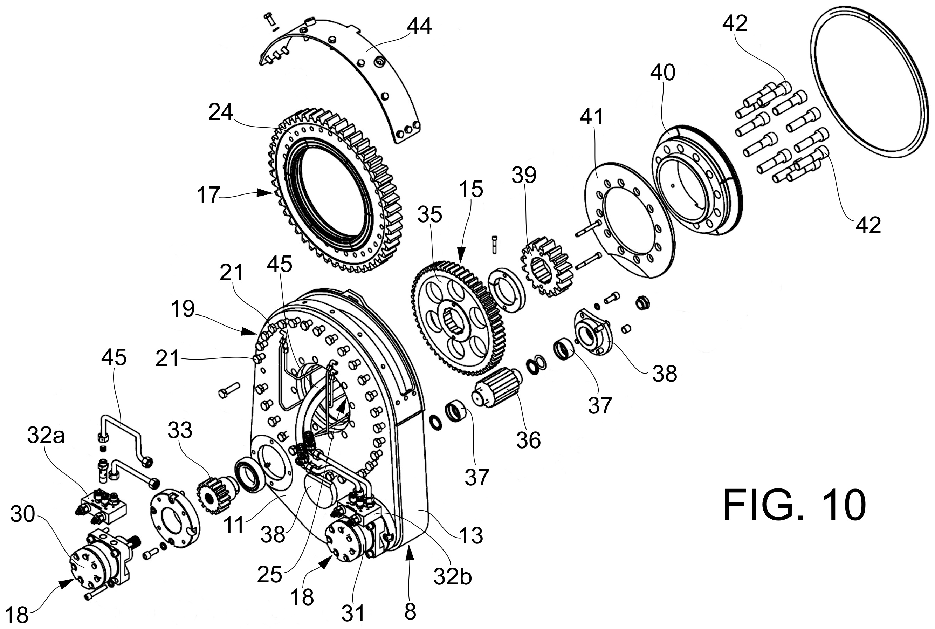

The box-shaped body 8 of the rotation assembly 1 is connected, as mentioned, to the shear 3 - which is the moving part of the system - at its front side 9; in more detail, the connection between the box-shaped body 8 and the shear 3 is carried out via first connecting means 19 (Figures 3, 10), which connect, in fact, the shear 3 to the front wall 11 of the box-shaped body 8.

Likewise, the connection between the rotation assembly 1 and the adapter 2 - which is the fixed part of the system - is carried out via second connecting means 20.

In more detail, the adapter 2 is connected, via the aforementioned second connecting means 20, to the output 17 of the gear system 15 (Figures 5, 7).

The first connecting means 19 are, preferably, of the screw type.

For example, the first connecting means 19 comprises a plurality of first screws 21. Furthermore, the first connecting means 19 comprise a plurality of first threaded holes 22 (Figures 7, 11), made in the front wall 11 of the box-shaped body 8, in which the first screws 21 are intended to engage.

The first screws 21 are, moreover, intended to engage in first through holes 23 made in the first flange 4 of the shear 3 (Figure 2).

The first threaded holes 22 of the box body 8, and the first through holes 23 of the first flange 4, are arranged along respective circumferences, of equal diameter.

In the assembled configuration, the rotation axis A of the shear 3 with respect to the adapter 2 passes through the centers of these circumferences.

The output 17 of the gear system 15 includes a ring gear 24.

The front wall 11 of the box-shaped body 8 is affected by a circular front opening 25, through the centre of which passes - in use - the rotation axis A of the shears 3 with respect to the adapter 2.

Furthermore, the rear wall 12 of the box-shaped body 8 is affected by a circular rear opening 26, concentric/coaxial with the front opening 25, through the centre of which passes - in use - the rotation axis A of the shears 3 with respect to the adapter 2.

Through the rear opening 26 of the box-shaped body 8, the connection between the output 17 of the gear system 15 and the adapter 2 is created, via the second connecting means 20 (and therefore, in practice, between the gear ring 24 and the adapter 2 itself).

The second connecting means 20 are also, preferably, of the screw type.

More specifically, the second connecting means 20 comprise a plurality of second screws 27 (Figures 5, 6, 7).

Furthermore, the second connecting means 20 comprise a plurality of second threaded holes 28, made in the gear ring 24, in which the second screws 27 are intended to engage.

The second screws 27 are, furthermore, intended to engage in second through holes 29 made in the second flange 6 of the adapter 2 (Figure 7).

The second threaded holes 28 of the gear ring 24, and the second through holes 29 of the first flange 4, are arranged along respective circumferences, of equal diameter.

In the assembled configuration, the rotation axis A of the shear 3 with respect to the adapter 2 passes through the centers of these circumferences.

As further explained below, the gear system 15 is a parallel-axis cylindrical gear system, which is preferred for its efficiency in power transmission, as the teeth mesh precisely, reducing friction and wear.

The actuator means 18 of the gear system 15 comprise two hydraulic motors 30, 31, or rotary hydraulic actuators; the hydraulic motors 30, 31 are associated with the input 16 of the gear system 15, which is therefore double.

The gear system 15, controlled by the two aforementioned hydraulic motors 30, 31, is configured to determine the relative rotation of the box-shaped body 8 - to which the shear 3 is associated - with respect to the adapter 2 (in turn rigidly connected to the arm of the operating machine), and therefore with respect to the ring gear 24 of the output 17, around the rotation axis A.

The central support 5 of the adapter 2 can house power supply members 32 of the actuator means 18 of the rotation assembly 1 (for example, a swivel joint or a rotary distributor).

As mentioned above, the actuator means 18 comprise two hydraulic motors 30, 31, in particular a first hydraulic motor 30 and a second hydraulic motor 31.

In particular, the first hydraulic motor 30 and the second hydraulic motor 31 are of the flanged type.

The first hydraulic motor 30 and the second hydraulic motor 31 are supported by the front wall 11 of the box-shaped body 8.

As shown, for example, in Figure 12, the first hydraulic motor 30 and the second hydraulic motor 31 are supported by the box-shaped body 8, so that their respective output axes are positioned specularly with respect to the middle plane of the box-shaped body 8 itself, which passes through the rotation axis A of the shear 3 with respect to the adapter 2.

The gear system 15 comprises a first pinion 33, keyed to the output shaft of the first hydraulic motor 30.

Furthermore, the gear system 15 includes a second pinion 34, keyed to the output shaft of the second hydraulic motor 31.

The first pinion 33 and the second pinion 34 have the same number of teeth.

The gear system 15 also includes a first intermediate gear wheel 35.

The first intermediate gear wheel 35 is keyed onto an intermediate shaft 36 of the gear system 15.

The intermediate shaft 36 is preferably of the splined type.

The intermediate shaft 36 is rotatably supported by the box-shaped body 8, in a position equidistant from the axes of the first pinion 33 and the second pinion 34; therefore, the axis of the intermediate shaft 36 also belongs to the middle plane of the box-shaped body 8.

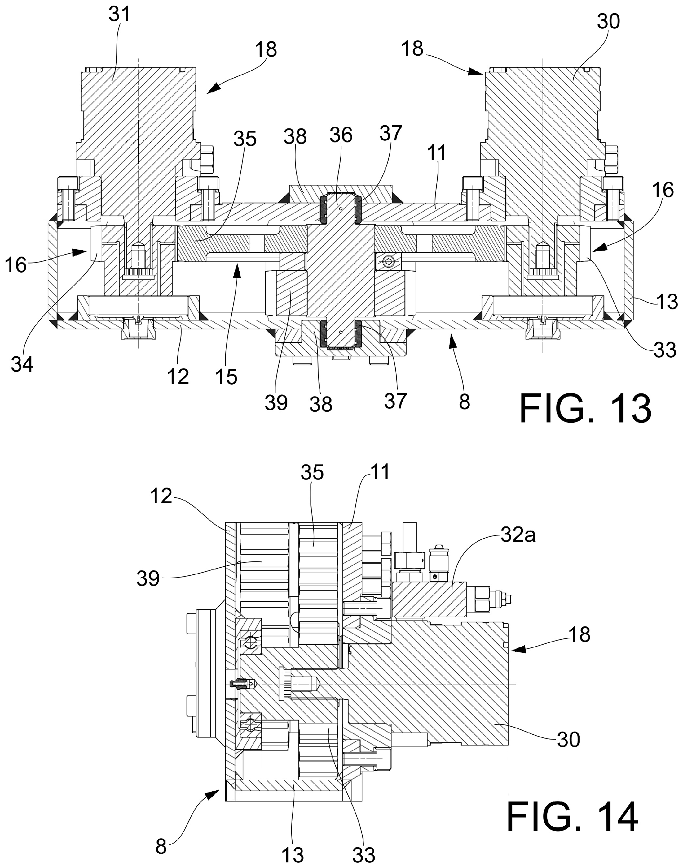

The intermediate shaft 36 is rotatably supported by plain bearings 37 which are housed in respective bearing holders 38 fixed, respectively, to the front wall 11 and to the rear wall 12 of the box-shaped body 8 (Figures 10, 13).

The first intermediate gear wheel 35 meshes with both the first pinion 33 and the second pinion 34, from opposite sides.

The first intermediate gear wheel 35 has a number of teeth greater than the number of teeth of the first pinion 33 and the second pinion 34.

It follows that the meshing between the first, second pinion 33, 34 and the first intermediate gear wheel 35 results in a decrease in the rotation speed with respect to that of the first hydraulic motor 30 and the second hydraulic motor 31, and therefore an increase in the transmitted torque.

The gear system 15 also includes a second intermediate gear wheel 39.

The second intermediate gear wheel 39 is also keyed onto the intermediate shaft 36. The number of teeth of the second intermediate gear wheel 39 is less than the number of teeth of the first intermediate gear wheel 35, and also less than the number of teeth of the ring gear 24.

The second intermediate gear wheel 39 meshes with the ring gear 24.

It follows that the meshing between the second intermediate gear wheel 39 and the ring gear 24 results in a decrease in the rotation speed, and therefore an increase in the transmitted torque.

A double reduction stage is then created between input 16 and output 17, so as to obtain the necessary torque at the output of the gear system 15 (and therefore on the ring gear 24).

The ring gear 24 is rotatably supported in the internal volume 14 of the box-shaped body 8 by a support assembly 40, 41 - for example comprising a flange and a counter-flange - which is secured, with internal screws 42, to the front wall 11 of the box-shaped body 8.

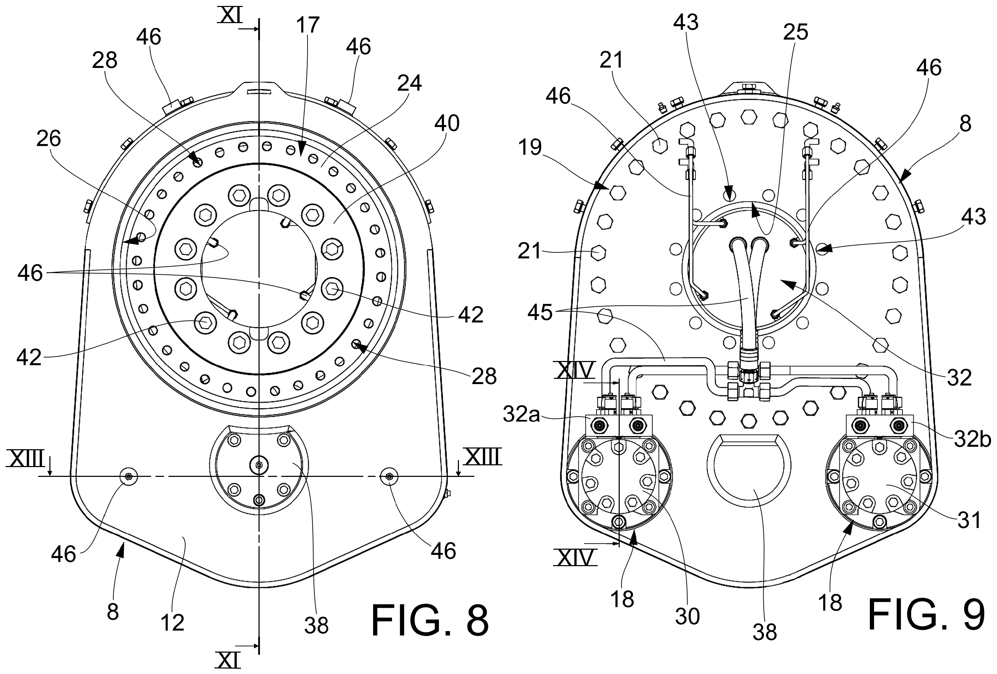

The internal screws 42 are intended to engage in respective front threaded holes 43, which are arranged at the periphery of the front opening 25 of the box-shaped body 8 (Figures 3, 9).

The power supply members 32 of the hydraulic motors 30, 31 may include elements and components, such as valves, pressure regulators, etc., necessary for the correct control of the operation of the motors 30, 31 themselves, in relation to the specific operational needs of the shear 3.

In particular, the power supply members 32 may comprise overcenter block valves 32a, 32b, associated with the first hydraulic motor 30 and the second hydraulic motor 31 (see for example Figures 9 and 10), which ensure synchronized movement of the two motors 30, 31.

Through the rear opening 26 and the front opening 25 (which are concentric) of the box-shaped body 8, it is possible to pass - for example - the hydraulic connection pipes 45 of the power supply members 32 to the actuator means 18.

The peripheral wall 13 of the box-shaped body 8 can be provided with a removable inspection cover 44, in particular on the side where the ring gear 24 is located.

The box-shaped body 8 of the rotation assembly 1 comprises a plurality of pipelines and lubrication openings 46 of the gear system 15, which allow for greater efficiency and durability over time with a reduction in noise and friction in various operating conditions.

The operation of the rotation assembly 1 according to the invention is, in light of what has been described, completely intuitive.

To obtain the rotation of the shear 3 with respect to the adapter 2, the first hydraulic motor 30 and the second hydraulic motor 31 are operated to rotate, by actuating power supply members 32, in the same direction and with the same rotation speed.

The meshing of the first pinion 33 and the second pinion 34 with the first intermediate gear wheel 35, consequently, causes the second intermediate gear wheel 39 to rotate, which meshes with the ring gear 24.

The latter, as mentioned, is integrally connected to adapter 2; consequently, a relative rotational motion of the box-shaped body 8 is obtained, with respect to adapter 2, around the rotation axis A.

The box-shaped body 8 therefore drags the shear 3 into rotation with it, and the rotation of the latter is thus obtained, with respect to the adapter 2 and therefore with respect to the arm of the operating machine, by the desired angular excursion and in the desired direction.

The present invention also relates to a forestry felling shear assembly G (as shown in Figure 2) comprising an adapter 2, connectable to an arm of a working machine, a rotation assembly 1, having the features previously described, associated with the adapter 2 at its rear side 10, and a shear 3 associated with the front side 9 of the rotation assembly 1.

We have thus seen how the invention achieves the proposed objects.

First of all, the construction solution adopted for the rotation organs, which include a gear system instead of a rotary table system, which is the one most frequently used in the prior art, allows for better performance in terms of solidity, reliability and reversibility, with consequent lower risks of breakages or damage during use, especially thanks to the fact that an optimized balance is obtained which reduces the drift of the shear 3, thus ensuring greater operational stability.

Furthermore, the gear system solution, according to the present invention, is also more advantageous when carrying out maintenance or part replacement operations, especially, but not only, in the after-sales sector.

In addition, the rotation assembly 1 according to the present invention allows for obtaining superior performance also with regard to the rotation speed of the shear 3 compared to the adapter 2.

In fact, the rotation assembly 1 according to the invention allows to obtain a rotation speed of the shear 3 of 3 revolutions/minute, compared to the speed of 1 revolution/minute of traditional rotary table solutions.

The solution according to the present invention allows to obtain (always in comparison with the solutions with a rotary table with a worm screw - helical wheel mechanism) a centered load, and this minimizes torsional stress and increases safety during operation.

The rotation obtainable with system 1 according to the present invention is 360°, thus ensuring maximum operational flexibility.

The gear system solution can provide very high torque, significantly improving the maneuverability of the shear 3, and therefore operations are performed more precisely.

Last but not least, it should be emphasized that the rotation assembly 1 according to the present invention can also be used in fields other than those of forestry felling shears, since its features make it adaptable to other different application fields as well.

The present invention has been described according to preferred embodiments, but equivalent variants can be conceived without departing from the scope of protection offered by the following claims.

## Claims

1. Rotation assembly (1) for forestry felling shears, and the like, comprising a box-shaped body (8) defining a front side (9) and a rear side (10), said front side (9) being intended for connection to a shear (3), said rear side (10) being intended for connection to an adapter (2) in turn suitable for connection to the arm of a machine tool, inside said box-shaped body (8) being provided rotation members (R) configured to determine the rotation of said shear (3) with respect to said adapter (2) around a rotation axis (A), said rotation members (R) comprising a gear system (15), provided with at least one input (16) and at least one output (17), and actuator means (18) associated with said input (16) and operationally connected and interlocked with power supply members (32), said output (17) being directly connected to said adapter (2), **characterized in that** said actuator means (18) of said gear system (15) comprise two hydraulic motors (30, 31) associated with said input (16), which is therefore double.

2. Rotation assembly (1) according to claim 1, wherein said output (17) of said gear system (15) comprises a ring gear (24), rotatably supported in the internal volume (14) of said box-shaped body (8), by a support assembly (40, 41) bound to the front wall (11) of said box-shaped body (8).

3. Rotation assembly (1) according to claim 1 or 2, wherein said actuator means (18) comprise a first hydraulic motor (30) and a second hydraulic motor (31), supported by the front wall (11) of said box-shaped body (8), so that the respective output axes are positioned specularly with respect to the middle plane of the box-shaped body (8) itself, which passes through said rotation axis (A) of said shear (3) with respect to said adapter (2).

4. Rotation assembly (1) according to claim 3, wherein said gear system (15) is a parallel-axis cylindrical gear system, and it comprises a first pinion (33), keyed to the output axis of said first hydraulic motor (30), and a second pinion (34), keyed to the output axis of said second hydraulic motor (31), said first pinion (33) and second pinion (34) having the same number of teeth.

5. Rotation assembly (1) according to claim 4, wherein said gear system (15) comprises a first intermediate gear wheel (35), which meshes with both said first pinion (33) and said second pinion (34), from opposite sides, having a number of teeth greater than the number of teeth of said first pinion (33) and of said second pinion (34), so that the meshing between said first, second pinion (33, 34) and said first intermediate gear wheel (35) results in a decrease in the rotation speed with respect to that of the first hydraulic motor (30) and of the second hydraulic motor (31), and therefore in an increase in the transmitted torque.

6. Rotation assembly (1) according to claim 5, wherein said intermediate gear wheel (35) is keyed onto an intermediate shaft (36) of said gear system (15) rotatably supported by said box-shaped body (8), in a position equidistant from the axes of said first pinion (33) and of said second pinion (34), so that the axis of said intermediate shaft (36) belongs to the middle plane of said box-shaped body (8).

7. Rotation assembly (1) according to claim 6, wherein said gear system (15) comprises a second intermediate gear wheel (39), keyed onto said intermediate shaft (36), and meshing with said ring gear (24), said second intermediate gear wheel (39) having a number of teeth lower than the number of teeth of said first intermediate gear wheel (35), and also lower than the number of teeth of said ring gear (24), so that the meshing between said second intermediate gear wheel (39) and said ring gear (24) results in a decrease in the rotation speed, and therefore in an increase in the transmitted torque.

8. Rotation assembly (1) according to one of the previous claims, wherein the front wall (11) of said box-shaped body (8) is affected by a circular front opening (25), and wherein the rear wall (12) of said box-shaped body (8) is affected by a circular rear opening (26), concentric to said front opening (25), through said openings (25, 26) passing, in use, the rotation axis (A) of said shears (3) with respect to said adapter (2), through said openings (25, 26) also passing ducts (45) for the hydraulic connection of said power supply members (32) to said actuator means (18).

9. Forestry felling shear assembly (G) comprising an adapter (2), connectable to an arm of a machine tool, a rotation assembly (1) according to one or more of the previous claims, associated with said adapter (2) at its rear side (10), and a shear (3) associated with the front side (9) of said rotation assembly (1).
